(19) Europäisches Patentamt
European Patent Office
Office européen des brevets

(11) **EP 3 491 549 B1**

(12) **EUROPEAN PATENT SPECIFICATION**

(45) Date of publication and mention
of the grant of the patent:
**12.03.2025  Bulletin 2025/11**

(21) Application number: **17805368.2**

(22) Date of filing: **14.11.2017**

(51) International Patent Classification (IPC):
**G06F 16/29** *(2019.01)*     **G06F 16/957** *(2019.01)*

(52) Cooperative Patent Classification (CPC):
**G06F 16/29; G01C 21/3682; G06F 16/9577**

(86) International application number:
**PCT/US2017/061532**

(87) International publication number:
**WO 2018/093774 (24.05.2018 Gazette 2018/21)**

(54) **ELECTRONIC MAP INTERFACES**

SCHNITTSTELLEN FÜR ELEKTRONISCHE KARTE

INTERFACES DE CARTES ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.11.2016  US 201662424946 P
21.08.2017  US 201715682215**

(43) Date of publication of application:
**05.06.2019  Bulletin 2019/23**

(73) Proprietor: **Google LLC
Mountain View, CA 94043 (US)**

(72) Inventors:
• **PRAHLADKA, Piyush
Sunnyvale, CA 94087 (US)**

• **FU, Zhaohui
Mountain View, California 94043 (US)**
• **ASGEKAR, Amogh S.
Mountain View, California 94043 (US)**
• **JOHANSON, Cynthia
Mountain View, California 94043 (US)**
• **TALASILA, Sai Deepak
Mountain View, California 94043 (US)**
• **JAYASUNDAR, Arvind
Mountain View, California 94043 (US)**

(74) Representative: **Marks & Clerk GST
1 New York Street
Manchester M1 4HD (GB)**

(56) References cited:
**WO-A2-2014/055346     US-A1- 2009 055 087
US-B2- 8 078 641**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### BACKGROUND

This document relates to electronic map interfaces. Communications networks have enabled the distribution of information to users across the globe. One type of information provided to users is provided in the form of electronic maps. Users can interact with electronic maps presented at a client device to obtain information about various geographic regions. The amount of information that is available about a given geographic region (or points of interest in the given geographic region) exceeds the amount of information that can be presented on the electronic map without cluttering the presentation of the electronic map.

US 2009/055087 A1 describes systems and methods for displaying maps and points such as points corresponding to points of interest on displayed maps, the display of the points being dynamically and automatically altered in response to alterations in the displayed maps. The systems and methods include providing a map view and points therefor in response to a user request, as well as supplying preloaded map records for map views and points records so that the records and points are ready for display in the event the user selects actions to change the displayed view, such as by panning or zooming.

### SUMMARY

The invention is defined by the attached claims.
In general, one innovative aspect of the subject matter described in this specification can be embodied in methods that include the actions of receiving, from a client device, a request for presentation of an interactive map in a user interface that visually depicts a particular geographic location, and selecting, by one or more servers and based on the request, a map space that includes the particular geographic location. The one or more servers then identify multiple points of interest having geographic locations that are located within a geographic region that is visually depicted by the selected map space, and generate an overlay that dynamically presents, at the client device, one or more visual components at geographic locations of at least some of the identified points of interest within the map space based on display characteristics of the client device. The selection of the points of interest includes: ranking the identified multiple points of interest based on a likelihood of interaction with each of the visual components representing the points of interest, generating an overlay that prevents a number of visual components presented for the identified points of interest from exceeding a point of interest density threshold that is mapped to display characteristics of the client device in a data structure, wherein different point of interest density thresholds are mapped to different combinations of display characteristics in the data structure, wherein the point of interest density threshold is used to limit the number of points of interest that is pre-cached at the client device, and generating an overlay that dynamically changes, based on the ranking, which points of interest are identified by presented visual components in response to user interaction with the interactive map at the client device. The client device caches overlay information for the overlay and a portion of the map space, and updates the user interface of the client device with the map space and the overlay. Other embodiments of this aspect include corresponding systems, devices, apparatus, and computer programs configured to perform the actions of the methods. The computer programs (e.g., instructions) can be encoded on computer storage devices. These and other embodiments can each optionally include one or more of the following features.

The map space can have a map area that results in at least a portion of the map space being outside of a viewport of the client device prior to user interaction with the map space.

Generating the overlay can include generating an overlay that updates, at the client device using the cached overlay information, points of interest identified by the presented visual components based on user interaction with a change view control that changes a zoom level at which the map space is presented in the viewport. The update can be performed without requiring the client device to initiate an additional network call to the one or more servers.

Updating the points of interest identified by the presented visual components can include identifying a zoom level at which the map space is being presented in response to user interaction with the change view control; identifying, within the cached overlay information, a corresponding point of interest density threshold for the identified zoom level; identifying, within the cached overlay information, a set of points of interest that have a geographic location that is visually depicted in the viewport at the identified zoom level; and selecting, from the identified set of points of interest, one or more points of interest to be visually identified using a corresponding visual component, wherein a total number of the points of interest selected is less than or equal to the corresponding point of interest density threshold for the identified zoom level.

Selecting the one or more points of interest can include selecting the total number of highest ranked points of interest from the ranking.

Selecting the one or more points of interest can include selecting the one or more points of interest based on a device type of the client device or a screen size of the client device.

Selecting the one or more points of interest can include selecting the one or more points of interest based on a number of points of interest that have been pre-selected for presentation prior to the selecting.

Ranking the identified multiple points of interest can include ranking the identified multiple points of interest based on one or more of geographic locations previously visited by the user, categories of locations previously visited by the user, a frequency at which the user has previously visited different categories of locations, time of day information associated with previous visits to different categories of locations, a proximity of the points of interest to previous locations visited by the user, or search queries performed by the user on any supported search interface.

In another aspect, methods can include receiving, from a client device, a request for presentation of an interactive map in a user interface that visually depicts a particular geographic location; selecting, by one or more servers and based on the request, a map space that includes the particular geographic location; identifying multiple points of interest having geographic locations that are located within a geographic region that is visually depicted by the selected map space; generating, by one or more servers, an overlay that presents, at the client device, one or more visual components at geographic locations of at least some of the identified points of interest within the map space based on display characteristics of the client device, wherein generating the overlay includes: ranking the identified multiple points of interest based on a likelihood of interaction with each of the visual components representing the points of interest; selecting a number of the points of interest for which to display respective visual components, said number being chosen to as to prevent the number of points of interest for which visual components are presented from exceeding a point of interest density threshold, the point of interest density threshold being mapped to display characteristics of the client device in a data structure, wherein different point of interest density thresholds are mapped to different combinations of display characteristics in the data structure, wherein the point of interest density threshold is used to limit the number of points of interest that is pre-cached at the client device; and dynamically changing the overlay, based on the ranking, such that different points of interest are identified by presented visual components in response to user interaction with the interactive map at the client device; and caching, at the client device, overlay information for the overlay and a portion of the map space; and updating the user interface of the client device with the map space and the overlay.

Other embodiments of this aspect include corresponding systems, devices, apparatus, and computer programs configured to perform the actions of the methods. The computer programs (e.g., instructions) can be encoded on computer storage devices. These and other embodiments can each optionally include one or more of the following features.

The map space has a map area that results in at least a portion of the map space being outside of a viewport of the client device prior to user interaction with the map space.

Generating the overlay can include generating an overlay that updates, at the client device using the cached overlay information, points of interest identified by the presented visual components based on user interaction with a change view control that changes a zoom level at which the map space is presented in the viewport, wherein the update is performed without requiring the client device to initiate an additional network call to the one or more servers.

Updating the points of interest identified by the presented visual components can include identifying a zoom level at which the map space is being presented in response to user interaction with the change view control; identifying, within the cached overlay information, a corresponding point of interest density threshold for the identified zoom level; identifying, within the cached overlay information, a set of points of interest that have a geographic location that is visually depicted in the viewport at the identified zoom level; and selecting, from the identified set of points of interest, one or more points of interest to be visually identified using a corresponding visual component, wherein a total number of the points of interest selected is less than or equal to the corresponding point of interest density threshold for the identified zoom level.

Selecting the one or more points of interest can include selecting the total number of highest ranked points of interest from the ranking.

Selecting the one or more points of interest can include selecting the one or more points of interest based on a device type of the client device or a screen size of the client device.

Selecting the one or more points of interest can include selecting the one or more points of interest based on a number of points of interest that have been pre-selected for presentation prior to the selecting.

Ranking the identified multiple points of interest can include ranking the identified multiple points of interest based on one or more of geographic locations previously visited by the user, categories of locations previously visited by the user, a frequency at which the user has previously visited different categories of locations, time of day information associated with previous visits to different categories of locations, or a proximity of the points of interest to previous locations visited by the user.

Particular embodiments of the subject matter described in this specification can be implemented so as to realize one or more of the following advantages. The techniques discussed in this document prevent overcrowding of an electronic map interface that presents a map, which improves the user experience and the ability of a user to interact with and obtain information from the map. For example, the techniques discussed in this document can limit the number of points of interest that are visually identified on the map, thereby reducing the amount of the map that is occluded by the visual indications of the points of interest. The points of interest that are visually identified in a given view of the map can be those points of interest that are deemed most likely to be relevant to a particular user that is viewing the map, and be selected without requiring the user to input any information (e.g., a query or topic of interest). As such, the visually identified points of interest can be selected prior to user interaction with the electronic map interface, thereby improving the user's experience with the initial presentation of the map (e.g., including relevant points of interest without requiring user interaction with the electronic map interface). The latency associated with updating the view of the map that is presented in the electronic map interface when a user interacts with the electronic map interface can be reduced or limited (e.g., relative to map interfaces that do not utilize the techniques discussed herein) by utilizing an intelligent caching scheme that pre-caches additional map and/or overlay information at the client device in response to an initial request for a portion of a map (e.g., map space). For example, by pre-caching the additional map and/or overlay information (e.g., beyond that needed to present the requested portion of the map and corresponding visual indications of points of interest in the requested portion of the map space, the user can interactively (and seamlessly) change how much, or what part of, a map is presented in the electronic map interface because additional calls will not need to be made to a remote server. The reduced number of calls to the remote server also reduces the latency because each call to the remote server takes a certain amount of time to establish and tear down, such that each subsequent call to the server will increase the latency associated with changing the view of the map presented in the electronic map interface. This latency is larger for mobile devices operating over a wireless network, such as a cellular network, because of the amount of time that is required to establish each network call over the wireless network. The additional calls to the remote server also result in additional battery consumption, such that limiting the number of additional calls that a mobile device makes to a remote server will extend the battery life of the mobile device.

The details of one or more embodiments of the invention are set forth in the accompanying drawings and the description below. Other features, objects, and advantages of the invention will be apparent from the description and drawings, and from the claims.

## DESCRIPTION OF DRAWINGS

Fig. 1 is a block diagram of an example environment 100 in which map spaces are distributed over a network 102.
Fig. 2 is a diagram showing various map views on two different sample example client devices.
Fig. 3 is a flow chart of an example process for generating/distributing an overlay for an electronic map interface.

Fig. 4 is a block diagram of an example computer system.

Like reference number and designations in the various drawings indicate like elements.

## DETAILED DESCRIPTION

This document describes methods, systems, and devices for generating and providing an electronic map interface that presents a view of an electronic map in a viewport of a client device (referred to as a map view) and an overlay of visual components that visually identify points of interest (POI) that are located at geographic locations that are included in the map view. An initial map view can be presented at a client device in response to a request for an electronic map being received from the client device. The request can include information identifying a particular geographic location, which can be used to select a map space (e.g., portion of the electronic map) that includes the particular geographic location. Alternatively, or additionally, the map space can be selected based on default geographic information (e.g., a pre-specified geographic location or a geographic location that is included in a user profile of a user to whom the initial map view will be presented). As discussed in detail below, the map space that is selected and provided to the client device to present in the initial map view can include a larger portion of the map than will be presented in the initial map view, and at least some of the map space can be cached at the client device. This will enable seamless dynamic updates to the map view in response to user interaction with the electronic map interface (e.g., a user panning, zooming, or otherwise interacting with the electronic map interface to modify the map view), for example, by not requiring a subsequent call to a remote server to obtain additional map views. Rather, the map space that is cached at the client device can be used to modify the map view in response to user interaction with the electronic map interface.

In some implementations, an overlay is provided (e.g., downloaded, streamed, or otherwise transmitted) with the map space (or separate from the map space). The overlay is a file (or collection of files) that dynamically presents one or more visual components (e.g., map pins or other icons) on (e.g., presented over or integrated into) the selected map space. The placement of the visual components on the map space can identify locations of points of interest (e.g., parks, monuments, airports, coffee shops, gyms, or other points of interest) within the map space. While the visual components are beneficial for highlighting the locations of points of interest on the map space, the effectiveness of these visual components may decrease as the number of visual components display increases.

For example, as the number of displayed visual components increases, a larger portion of the map space may be occluded by these visual components, which can make it more difficult to use the map space (e.g., due to important visual features of the map space being occluded). Additionally, it may become more difficult for a user to visually identify the different visual components (or boundaries thereof) that are presented because the visual components may overlap as the number of displayed visual components increases. This "crowding" of visual components in a map space can make it difficult for a user to interact with a particular visual component (e.g., due to crowding of the visual components in the display), which can result in a user inadvertently interacting with a different visual component than intended. Inadvertent user interactions with visual components can lead to user frustration, a degraded user experience, and the transfer of additional network traffic (e.g., by transferring data in response to the user interaction with the visual component that was interacted with, while the user was intending to interact with a different visual component) because the user may be presented information other than the information they were seeking, and the user will have to again attempt to interact with the visual component that the user was intending to interact with initially.

In some implementations, the set of visual components can be ranked and/or selected to increase the likelihood that the points of interest identified in the map space (e.g., by presentation of the visual components) are points of interest that are relevant to the user. For example, as described in detail below, the set of visual components that are selected for a given map space can be identified using historical information for the user (e.g., historical user interactions by the user with various points of interest, historical search queries submitted by the user, historical visits to particular geographic locations by the user, or other historical information). Using the historical information can enable selection of points of interest relevant to the user prior to user interaction with the map space that is provided in response to the request, and also enables the points of interest to be identified independent of (e.g., without or prior to) user submission of a search query through the electronic map interface.

As described in detail below, a set of visual components representing points of interest on a map space can be limited (e.g., by including fewer than all available visual components in the set) based on a point of interest density threshold corresponding to display characteristics of the client device. In this context, the "point of interest density" can be understood to refer to the number of points of interest for which visual components are displayed, and the point of index density threshold defines an upper limit to that number. The point of interest density threshold may vary for devices having viewscreens or viewports of different dimensions, for example. As used throughout this document the term "viewport" refers to a portion of a display in which the map space is presented (e.g., a portion of a web page or application interface that presents the map space). The point of interest density threshold may vary depending on the zoom level at which the map is displayed. Using the point of interest density threshold can prevent the electronic map interface from being cluttered, thereby improving the user experience with the map space by reducing the likelihood of inadvertent interactions with the visual components, preventing important aspects of the map space from being occluded, and making it easier for the user to identify the different visual components and corresponding points of interest presented in the map space. In some implementations, the point of interest density threshold can inform a reduction in the number of points of interest presented to a user in a map view from a total number of available points of interest included in the overlay.

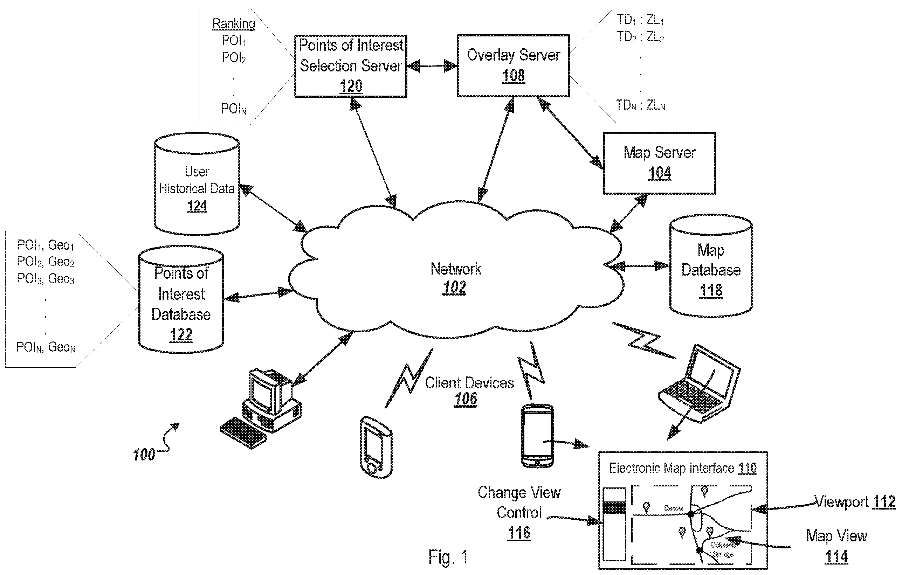

Fig. 1 is a block diagram of an example environment 100 in which map spaces are distributed over a network 102. The environment includes a network 102, such as a local area network (LAN), a wide area network (WAN, the Internet, or a combination thereof. The network 102 connects a map server 104, client devices 106, and an overlay server 108. The example environment 100 may include many different map servers 104, client devices 106, and overlay servers 108.

A client device 106 is an electronic device that is capable of requesting and receiving data (including packetized representations of map interfaces) over the network 102. Example client devices 106 include personal computers, mobile communication devices, and other devices (e.g., tablet devices, home automation devices, or other devices) that can send and receive data over the network 102. A client device 106 typically includes a user application, such as a web browser, to facilitate the sending and receiving of data over the network 102, but native applications (e.g., map applications or search applications) executed by the client device 106 can also facilitate the sending and receiving of data over the network 102.

An electronic document is data that presents a set of content at a client device 106. Examples of electronic documents include webpages, word processing documents, portable document format (PDF) documents, images, videos, search results pages, and feed sources. Native applications (e.g., "apps"), such as applications installed on mobile, tablet, or desktop computing devices are also examples of electronic documents. An electronic document can be nested within a second electronic document; for example, an image embedded within a webpage or multiple different electronic documents (e.g., from different sources) can be combined to create an aggregate electronic document that includes the multiple different electronic documents. A map space is a specific type of electronic document that includes map information from a portion of an electronic map. For example, a particular map space may include map information for a geographic area that is centered at the city of Atlanta and extends three miles from the city center. Note that a map space can be any shape (e.g., rectangular, oval, circular, triangular or irregular). Map spaces can be provided to client devices 106 by the map server 104. For example, the map server 104 can receive a map request from a client device 106 and provide a map space to the client device in response to the request. In some implementations, the user can access a map space through an electronic map interface 110, which may be at least part of a web browser or native application, and includes at least a portion of the map space.

The map request can include, for example, data specifying a particular geographic location and/or display characteristics of the environment in which the map space will be presented. For example, the map request may include packetized data specifying the geographic location of Atlanta, GA, and also include packetized data specifying a size (and/or dimensions) of a viewport 112 in which the map space will be presented and/or an initial zoom level at which the map space will initially be presented in the viewport 112 at the client device 106. A map view 114 is presented within the viewport 112 that is part of the electronic map interface 110. The map view, or portion of map space presented in the viewport, is dependent in part on the dimensions of the viewport 112 and the zoom level at which the map space is presented, representing at least a portion of the total map space. For example, if the display characteristics for a particular instantiation of a map request are made by a tablet computer where the viewport is the entire screen area, the resulting map view will be the portion of the map space that is presented in the entire screen area of the tablet computer. Although the processes are described herein as being implemented at separate servers, a single server could perform all of the functionality in question. Alternatively, or additionally, the multiple servers could be implemented in a single hardware device or across multiple devices in a distributed computing environment.

The map server 104 is a computing device (or group of computing devices) that distributes (e.g., transmits) map spaces to client devices. The map server 104 analyzes the map request to identify the geographic location of the request and identify the display characteristics. For example, the map server can identify a portion of the map request that includes an identifier that is used to identify geographic data in the request, and determine the geographic location from the geographic data. The geographic data can be, for example, latitude/longitude coordinates, a city name, a state name, a country name, or some other indication of a geographic location. This geographic data can then be used to identify the geographic location, for example, by comparing the geographic data to an index of geographic data and identifying a corresponding geographic location that is indexed to the geographic data.

The map server 104 uses the geographic location and the display characteristics to select a map space from a map database 118 that will be provided in response to the request. For example, in response to a map request for the "Little Five Points" area in Atlanta, GA, the map server will access a map space including the Little Five Points area within the area of the map space from the map database. As stated above, the map space provided to the client device is at least the size of the initial map view 114 presented in the client device viewport 112. In general, the map view will be smaller than the map space such that a portion of the map space will be outside the viewport of the client device at any given time. Additionally, the size of the map space provided to the client device will reflect information about the display and processing capabilities of the client device. For example, if the user is accessing the electronic map interface through an older model mobile phone on a lower speed network, the size of the map space may be selected accordingly (e.g., the map space will be smaller).

The map server can transmit (or otherwise share) characteristics of the selected map space to the POI selection server 120 and/or the overlay server 108, which use the characteristics to identify points of interest that are included in the map space, and create an overlay to include with the map space provided, respectively. For example, the points of interest (POI) selection server 120, can identify points of interest from the points of interest database 122 having geographic identifiers (e.g., longitude/latitude coordinates), where each point of interest ($POI_N$) has an associated geographic identifier ($Geo_N$) that are located within the geographic coordinates that bound the map space. From the available points of interest, the POI selection server can then create a ranking of the points of interest based, in part, on user historical data 124. The user historical data 124 may include a user's historical map interactions, locations previously visited, recommendations of the user's social network, historical search queries, and user preferences. For example, if a particular user frequents a hardware store within the Little Five Points area in Atlanta, GA, the POI selection server 120 will rank the particular store and location more highly in the list of points of interest to be presented in the map space. From a ranked list of points of interest, the overlay server 108 can construct the overlay provided to the client device along with the map space. The overlay further includes information about a point of interest density threshold corresponding to display characteristics of the client device. As noted above, the utility of the map view and/or the visual components that identify the points of interest can decrease as the number of points of interest visually identified in the map view increases, such that all of the points of interest included in the overlay with the map space may not be able to be visually identified in a particular map view at the same time. However, the number of visual components that can be presented in any given map view without cluttering the map view will depend on various factors, such as the size of the viewport and the zoom level of the map view. As such, the number of visual components that can be presented without cluttering the map view will change as the map view is changed at the client device.

The overlay server can ascribe characteristics to an overlay (e.g., by way of an index that maps a particular point of interest threshold density ($TD_N$) to a particular zoom level ($ZL_N$) for specific client device characteristics). In some implementations, the number of POI presented in the map view is responsive to changes in the map view at the client device based on the point of interest threshold density. For example, if a user zooms in (e.g., causing a more detailed view of a given area to be presented), it may be possible to present additional visual components for points of interest in that given area than when the user zooms out (e.g., causing a less detailed view of the given area to be presented). In some implementations, the electronic map interface at the client device includes a change view control 116 that enables the user to dynamically change (e.g. zoom, pan, etc.) the portion of the map space presented in the viewport 112.

As described in more detail below, the set of visual components identifying points of interest in the map space includes more visual components than those points of interest that are initially presented (or identified by way of presented visual components) in the initial map view of the map space. For example, the additional visual components can include visual components for points of interest that are located at geographic locations of the map space that are not included in the initial map view (e.g., are initially outside of the viewport), and/or visual components that are only presented at higher levels of zoom (e.g., more detailed map views).

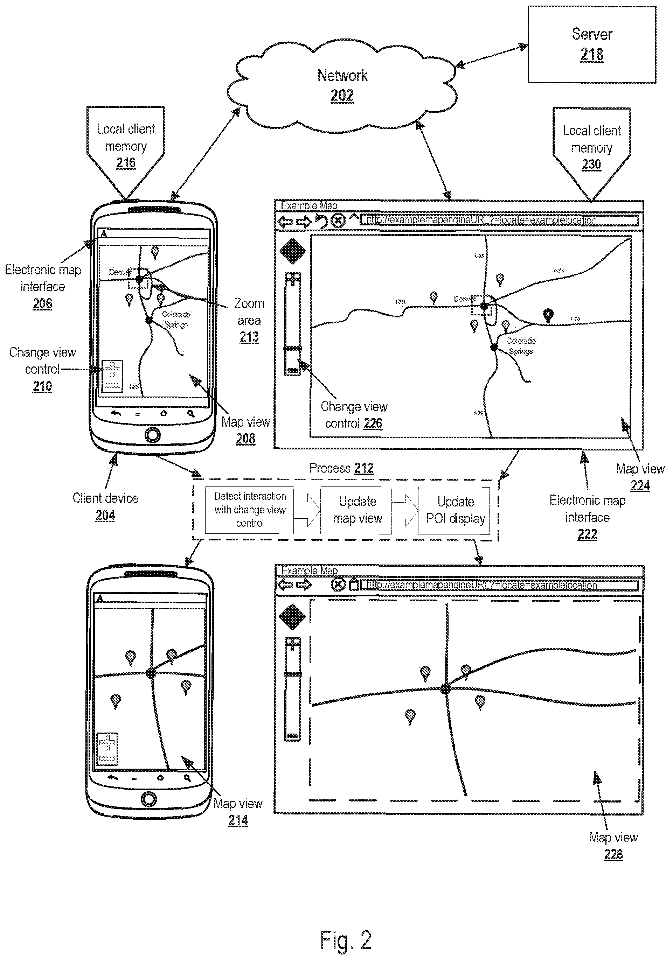

Fig. 2 is a diagram showing various map views on two different example client devices. Client device 204 is a mobile device (e.g., smart phone) that presents the electronic map interface 206. The electronic map interface 206 can be in the form of a map application that is installed on the mobile device 204. A map view 208 is presented in the map application along with several visual components that identify points of interest in the map view 208. The map view 208 can be an initial map view that is presented at the client device 204. For example, as discussed above, in response to the initial request by the user for a map, the map server 104 can identify a map space that includes the portion of the map visually depicted by the map view 208, and transmit the map space to the client device 204. Upon receipt of the map space, the client device 204 can store/cache the map space (and any additional data required to present the map space) in a local client memory 216. Additionally, the client device 204 can use the received map space to render and display the portion of the map that is initially presented in the map view 208 prior to user interaction with the map space or any controls.

As discussed above, in some implementations, at least a portion of the map space that is stored in the local client memory 216 will not be visually depicted in the initial map view 208 that is initially presented in the viewport of the client device 204, thereby enabling the map view to be changed (e.g., panned or zoomed) without requiring the client device 204 to initiate another network call to the map server 104. As such, an update to the map view will occur faster than it would otherwise occur if the client device 204 was required to make an additional network call to obtain a different map space.

As shown, the initial map view 208 includes electronic components (e.g., map pins) that visually identify the geographic locations of several points of interest in the initial map view 208. The points of interest can be visually identified in an overlay that is transmitted to the client device 204 by the overlay server 108. As discussed above, the points of interest visually identified by electronic components (e.g., map pins) in a given map view may not be the full set of the points of interest that were selected by the points of interest selection server 120 in response to the request. For example, the map view 208 does not include any electronic components identifying points of interest in the zoom area 213, which is visually presented in the map view 214 that visually identifies four points of interest using electronic components (e.g., map pins). The overlay can also be stored in the local client memory 216, such that the points of interest presented in updated map views can be dynamically updated without requiring the client device 204 to initiate another network call to the overlay server 108.

The electronic map interface 206 includes a change view control 210 (e.g., zoom function "+" and "-") that enables the user to modify the map view 208 that is presented in the electronic map interface 206. For example, user interaction with the change view control 210 initiates a process 212.

Process 212 includes detection, by the client device 204, that the user has interacted with the change view control 210. In response to detecting the user interaction, the client device 204 updates the map view and the POI based on the user interaction with change view control 210. In some implementations, the update to the map view and the update to the POI displayed with the updated map view is performed using the map space and overlay information that was previously provided to the client device and cached at the client data store 216 in response to a previous request for the map space.

For example, in response to detecting an interaction with a change view control (e.g., a zoom or pan in the map view) the client device 204 will identify a geographic area that should be presented in the electronic map interface based on the interaction. The client device 204 can then evaluate the geographic area that is included in (e.g., graphically represented by) the previously cached map space (e.g., by comparing a range of geographic coordinates that will be included in the updated map view to a range of geographic coordinates included in the previously cached map space). When the client device 204 determines that the geographic area that should be presented in the electronic map interface is included in the previously cached map space, the client device 204 updates the map view to present a different portion of the previously cached map space in the electronic map interface.

The client device 204 selects updated (e.g.,

different) points of interest that will be visually identified in the updated map view (e.g., using "map pin" icons), thereby resulting in an updated POI display. The POI that will be visually identified in the updated map view can be selected based on information about the different portion of the previously cached map space that is selected for presentation. In some implementations, the client device 204 identify POI that are located at geographic locations that are included in the updated map view, for example, using information provided with the overlay information that was previously cached at the client device 204 in response to a previous request for a map space. For example, the overlay information may include an index that maps POI to geographic locations (e.g., geographic coordinates) and/or "tiles" of the map space.

A tile of a map space is a portion of a segmented map space, and a tile can have a unique identifier that is used to distinguish that tile from other tiles that make up the map space. As such, the overlay information can specify that particular POI are within a given map tile by mapping (or otherwise indexing) the unique identifier of the given map tile to the particular POI. As such, when the client device 204 determines that a particular tile is being presented in the updated map view (e.g., by accessing or reading the unique identifier of the tile), the client device 204 can identify the POI that are included in that particular tile based on those POI being mapped to the unique identifier of the tile (e.g., by comparing the unique identifier of the tile to the tile identifier that has been associated with the POI) in the overlay information that was previously cached at the client device 204.

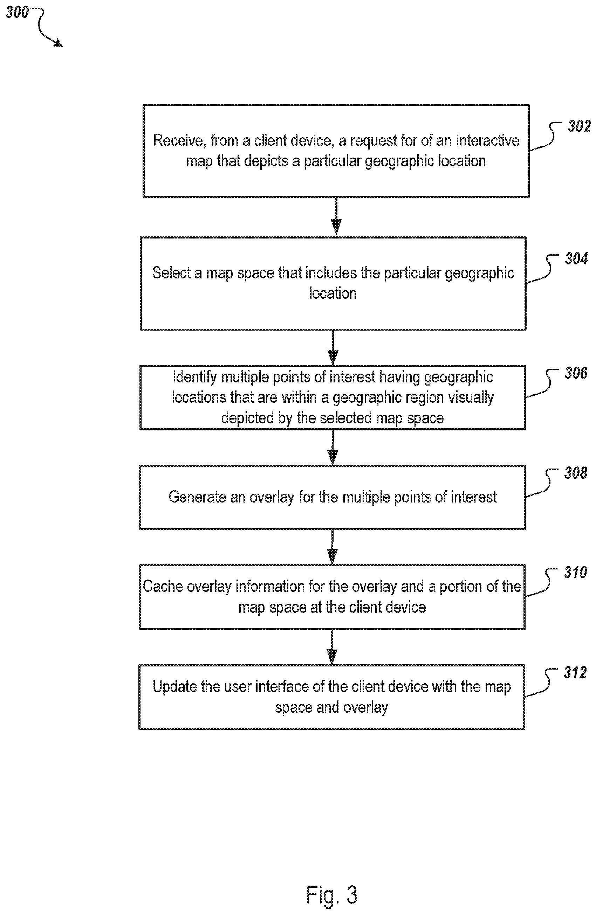

As discussed in more detail with reference to Fig. 3, the number of POI that are visually identified (e.g., using a visual component, such as a map pin icon) in the updated map view can be limited based on the pre-determined POI density threshold parameters that are provided to the client device 204 with the overlay information. Different pre-determined POI density threshold parameters can be mapped to different zoom levels (and/or other device display characteristics including viewport boundaries) to prevent cluttering of the map space when presented at various zoom levels, thereby enhancing the user experience with the electronic map interface. This mapping of pre-determined POI density threshold parameters to zoom levels can be stored in the local client memory 216 when the overlay information is provided to the client device 204, thereby preventing the client device 204 from having to initiate a network call for this information when a user interacts with the change view control 210. Caching the pre-determined POI density threshold parameters at the client device 210 reduces the latency associated with updating the map view because the client device 204 will not have to contact a remote server in response to each user interaction with the change view control 210, which facilitates more fluid interaction with the map space.

The pre-defined POI density threshold parameters are used to limit the number of POI that must be identified and pre-cached at the client device 204, thereby reducing the amount of data that needs to be stored at the client device 204. Additionally, a set of personalized POI for the user accessing the electronic map interface can be generated by ranking the POI based on historical information associated with the user, as discussed in detail below with reference to FIG. 3. In some implementations, only the set of highest ranked POI are provided to the client device, where the number of POI included in the set can be limited to the maximum number of POI that could be presented according to the highest pre-determined point of interest threshold density that is associated with the map space.

It is conceivable that, in some scenarios, the set of the highest ranked POIs for which visual components are displayed may still be co-located within a small region of the viewport. One such scenario may be, for example, when a user views the map at a very low zoom level in which a city occupies a very small number of pixels in the display. Whilst this could give rise to clutter in that part of the image, the problem will still be resolved upon zooming in on that location; as the zoom level increases, so the spacing between the points of interest will naturally increase, reducing clutter. The point of interest density threshold will in turn place a limit on the number of points of interest with which the image is populated, thereby ensuring that the increased spacing between points of interest is not compromised by addition of significant numbers of additional points of interest.

In some implementations, the client device requests an updated map space and overlay information from the server 218 through the network 202. For example, if the user zooms out and pans the map view outside of the map space previously cached at the client device, then the client device will access the server 218 to request a new map space and overlay in a manner similar to that discussed above with respect to Fig. 1. Server 218 can represent multiple distributed server devices (e.g., a separate POI selection server 120, overlay server 108, and map server 104), or a single server device that performs multiple functions of the separately identified servers in Fig. 1, or a combination of both.

Another sample client device 220 is a tablet device that has a larger display area than the client device 204. The client device 220 includes the electronic map interface (e.g., within a web browser) 222 that presents map view 224. User interaction with the change view control 226 (e.g., uses a zoom function) initiates process 212 and updates the map view in the electronic map interface to display a new map view 228. The new map view 228 can be presented by the client device update from the previously cached map space and overlay stored at the client data store 230. If the map view 228 is outside the cached map space, then a request to the server 218 could be made through the network 202 to receive a new map space and overlay at the client device.

Different client devices may have different display sizes and/or support different viewport sizes, and consequentially may display varying numbers of POI for the same map space and zoom characteristics, due to differences in density thresholds established for each particular client device with respective display characteristics. For example, the map views 208 and 224, and updated map views 214 and 228 in Fig. 2 are nominally showing the same initial and final zoom levels respectively, but present different numbers of POI due to the difference in viewport sizes. Fig. 3 is a flow chart of an example process 300 for generating/distributing an overlay for an interactive map. Operations of the process 300 can be performed by one or more data processing apparatus, such as the server 21 8 of Fig. 2. Operations of the process 300 can be implemented as instructions stored on a non-transitory computer readable medium, and execution of the instructions can cause one or more data processing apparatus (e.g., servers or other computing devices) to perform the operations of the process 300.

A request for presentation of an interactive map that visually depicts a particular geographic location is received from a client device (302). In some implementations, the request is received independent of (e.g., without) a search query specifying an informational need of a user that submitted the request. For example, the request may be initiated when a map application is launched at the client device, and the particular geographic location can be based on the current location of the client device (e.g., as specified by GPS data when location based services are enabled at the client device) or a default location that is pre-specified for the client device.

The interactive map will be presented in user interface of the client device in response to the request. Display characteristics of the user interface can be identified or determined based on information included in the request. In some implementations, the display characteristics can be embedded in the request. For example, the display characteristics can be appended to a URL of the request or included in a specific location of a data packet received with the request. In these situations, the display characteristics (e.g., size, aspect ratio, resolution, orientation, or other characteristics) can be directly identified from the request itself.

In some implementations, the request includes information identifying a device type or specific device identifier and/or application identifier (e.g., ModelX Smartphone Identifier, BrowserY identifier, and/or MapApplicationZ identifier). In these situations, at least some of the display characteristics (e.g., a screen size and/or resolution) of the client device can be identified using a mapping of device model and/or application identifier to display characteristics (e.g., screen size and/or display resolution). For example, the mapping can be searched for an identifier matching the identifier included in the request, and the display characteristics that are mapped to the matching identifier can be used as the display characteristics of the client device that submitted the request.

A map space that includes the particular geographic location is selected based on the request (304). In some implementations, selection of the map space includes the identification of a portion of the map (e.g., a map tile) that includes the particular geographic location. For example, geographic coordinates of the particular geographic location can be used to identify the portion of the map that visually depicts the particular geographic location (e.g., by identifying a map tile that is indexed to the particular geographic location).

In some implementations, the selected portion of the map will be presented in an initial map view that centers the particular geographic location in the viewport of the client device (or at some other specified location of the viewport). Depending on the display characteristics of the client device, a size of the selected portion of the map (e.g., map tile), and/or a size of the viewport in which the selected portion of the map will be presented, the selected portion of the map may not fill the entire viewport. Therefore, additional portions of the map may also be selected so that the entire viewport is filled with visual depictions of the map.

The additional portions of the map can be, for example, map tiles that are adjacent to the map tile that was selected using the particular geographic location. In some implementations, a map area of the aggregate set of map portions selected in response to the request will include geographic areas beyond the geographic area included in an initial map view. The initial map view is the initial view of the map space that is presented in the viewport of the client device prior to user interaction with the interactive map. As such, the map area can include portions of the interactive map that are not presented in the viewport of the client device (e.g., off screen) prior to user interaction with the interactive map. As discussed above, possible interactions with the interactive map can include changing a zoom level at which the map space is presented and/or panning left, right, up, or down to change a portion of the map space that is presented in the viewport. Each interaction can initiate presentation of an updated map view that presents different map information.

Multiple points of interest are identified for the selected map space (306). In some implementations, the identified points of interest have geographic locations that ware located within a geographic region that is visually depicted by the selected map space. For example, assume that the particular geographic location is the city of Atlanta, GA, and that the selected map space includes a map area extending 15 miles from a center of Atlanta (e.g., a radius of 15 miles or a rectangle that is 15 miles in each of the four cardinal directions of North, South, East, and West). In this example, the points of interest identified for the selected map space can include any points of interest that are within 15 miles from the center of Atlanta.

An overlay is generated for the multiple points of interest (308). The overlay dynamically presents, at the client device, one or more visual components (e.g., map pin icons or other icons) at geographic locations of at least some of the identified points of interest within the map space. The dynamic presentation of the visual components can cause the client device to update the points of interest identified by the visual components in response to (e.g., based on) user interaction with a change view control. A change view control can be, for example, a zoom level control that changes a zoom level at which the map space is presented in the viewport. The change view control can also be a panning control that repositions the map space in the viewport (e.g., changing a portion of the map space presented in the viewport). As discussed in more detail below, the particular points of interest visually identified in a given map view can be based on the display characteristics of the client device, a zoom level of the map view, features of the map space being presented, user preferences, and/or historical data corresponding to a user viewing the map.

The generation of the overlay can include ranking the identified multiple points of interest based on a likelihood of interaction with each of the visual components representing the points of interest. For example, the ranking can reflect a relevance of each of the points of interest to the user viewing the map space, where more highly ranked points of interest are considered more relevant to the user than lower ranked points of interest. In some implementations, the level of relevance of each point of interest to the user can be determined based on historical activity of the user or a group of users similar to the user, as discussed below. The following discussion assumes that location based services are enabled (e.g., at the client device or in a user account). The ranking of points of interest for inclusion in the overlay may take into account the user's actions within the electronic map interface (e.g., during previous map viewing sessions prior to submission of the request), or from search queries previously submitted by the user (e.g., during previous map viewing sessions or through a search engine). For example, assume that the user visits a particular coffee shop on a regular or even infrequent basis. In this example, the level of relevance of coffee shops (and the particular coffee shop) to the user can be adjusted (e.g., increased or decreased) in proportion to the frequency at which the user visits the particular coffee shop. In the present example, the user's visit to the particular coffee shop may contribute more to the level of relevance for the particular coffee shop than coffee shops in general because of the repeated visits to that same coffee shop. For example, the contribution of a visit to the particular coffee shop to the relevance of the particular coffee shop as a point of interest may be more heavily weighted than the contribution of this same visit to the relevance of coffee shops as a category of locations.

Continuing with the example above, the relevance of points of interest that are within a geographic proximity of the particular coffee shop can also be adjusted based on the frequency at which the user visits the particular coffee shop (or other points of interest in the same geographic vicinity). For example, assume that a book store is located in a same shopping center as the particular coffee shop. In this example, the relevance of the book store to the user may be adjusted based on the frequency at which the user travels within a specified distance of the shopping center. More specifically, the relevance of points of interest near locations visited by the user can be increased based on their proximity to the user's historical travel paths and the frequency at which the user travels along those paths or to particular locations.

The contribution of a user's visit to a given location on the relevance of a particular point of interest can be weighted based on the proximity of the given location visited by the user to the point of interest. For example, in order for the user visit to the given location to contribute to the relevance of the point of interest, the point of interest may be required to be within a specified distance (e.g., miles or travel time) of the given location. In these situations, points of interest that are not within the specified distance will not have their relevance adjusted based on the user's travel to the given location.

Additionally, or alternatively, the effect of a user visit to the given location on the relevance of a particular point of interest can be weighted based on the distance of the particular points of interest to the given location. For example, a weight applied to the visit to the given location can be a decreasing function in distance relative to the given location, such that the contribution of the visit to the given location will decrease for points of interest that are further away from the given location.

In another example, if a particular user's search query history has included a reference to a POI found geographically within the map space (e.g., a search for "Atlanta Children's Museum"), then the relevance of the POI to the user may be increased relative to other identified points of interest that were not referenced in the user's search query history. The frequency of particular searches or categories of searches by the user can also be used to adjust the relevance of particular points of interest (e.g., the particular coffee shop) and/or categories of points of interest (e.g., coffee shops generally). For example, the relevance of a given point of interest category can be increased as the frequency of searches by the user related to that given point of interest category increases.

The relevance of a given point of interest can also be adjusted using preferences specified by the user. For example, assume that a particular user requests a map space of Atlanta, GA that includes the geographic location of Example Science Museum. Also assume that this particular user has previously specified a preference for points of interest in the "family-friendly activities" point of interest category (e.g., through a selection in the user's profile or account settings). In this example, the ranking of Example Science Museum will be increased relative to other non- "family-friendly activities" points of interest based on the user's express indication that they are interested in points of interest related to "family-friendly activities.".

In addition to ranking POI based on a particular user's history or preferences, the preferences and recommendations of the user's social network connections can also be used to rank the identified POI. The user's social network may include a set of influential users and/or those users whose geographic location is within the area of the map space provided to the client device. For example, assume that other users that are connected (e.g., friends, connections, contacts, or otherwise in communication) with the user in the user's social network have highly rated a specific yogurt shop (e.g., through online reviews or by frequency of visit). In this example, when the user requests a map space that includes the geographic location of the highly rated yogurt shop, the overlay selection process will be more likely to highly rank and select the highly rated yogurt shop as a point of interest that is included in the overlay provided with the map space because of the high rating of the yogurt shop by the user's social network connections.

The relevance of a given POI for purposes of ranking the POI relative to other POI may be adjusted based on each POI category to which the given POI belongs. For example, a POI representing the Example Science Museum in Atlanta, GA may be categorized as "museum," "science museum," and further "family-friendly activities." In this example, the relevance of the Example Science Museum as a POI for a given user can be based on the aggregate relevance of each POI category to the given user. The aggregate relevance can be additive (e.g., the relevance of each POI category is added to the relevance of the other POI categories), or the relevance can be determined using a model that is generated using machine learning techniques and a set of training data (e.g., historical user data and interaction data specifying user interactions with points of interest). In these situations, the machine learning model can be applied to the historical data of a given user and available points of interest to provide an interaction likelihood for each of the available points of interest. This interaction likelihood can then be considered the level of relevance of the POI, and used to rank the POI relative to other POI.

As discussed above, the identified multiple points of interest can be ranked based on one or more of geographic locations previously visited by the user, categories of locations previously visited by the user, a frequency at which the user has previously visited different categories of locations, and/or a proximity of the points of interest to previous locations visited by the user. In some implementations, the time of day and/or day of week can be considered for purposes of the ranking as well. For example, assume that a user visits the particular coffee shop at the same time each weekday, but then visits the particular coffee shop two hours later on the weekend. In this example, the time of day information associated with previous visits to different categories of locations can be used to increase the relevance of coffee shop points of interest on weekdays at the time of the weekday visits, and increase the relevance of coffee shop points of interest two hours later on the weekends.

The overlay is generated in a manner that prevents a number of visual components presented from cluttering the map view, thereby enabling a user to effectively utilize the map and obtain information from the map while the visual components of the points of interest are presented. In some implementations, the generated overlay prevents the number of visual components presented from exceeding a point of interest density threshold. The point of interest density threshold specifies a maximum number of visual components (e.g., identifying the geographic locations of points of interest) that are allowed to be presented in a particular map view. As discussed above, the point of interest density threshold for a given map view can be selected based on display characteristics of the client device. For example, a mapping of display characteristics to point of interest density thresholds that is stored in a data structure can specify the point of interest density threshold for various combinations of display characteristics.

In some implementations, the point of interest density threshold can be determined based on a set of pre-specified rules. For example, a first rule may specify that the maximum point of interest density threshold ("maximum density threshold") for a mobile device is 5. Meanwhile, one or more additional rules may be used to augment (e.g., reduce) the maximum density threshold based on other display characteristics. For example, if the viewport is not being viewed in full screen mode, a second rule can specify that the maximum density threshold be reduced by 2 (or some other amount) visual components. Similarly, a third rule can specify that the maximum density threshold be reduced based on a number of other visual components that were selected for presentation in the map view prior to generating the overlay. For example, the third rule could specify that the maximum density threshold be reduced by 1 for each POI that was selected for presentation prior to the generation of the overlay.

The overlay can be generated to include visual components for a highest ranked set of the identified points of interest. In some implementations, the highest ranked set of points of interest can be those points of interest that were determined to have the highest relevance to the user, as discussed above. The number of points of interest that are included among the highest ranked set of the identified points of interest can include any point of interest that is potentially presentable given the map space selected and the point of interest density thresholds for the map space. For example, assume that the maximum density threshold for any map view of the map space is 5. In this example, the 5 highest ranked points of interest will be included in the highest ranked set of the identified points of interest.

Additional points of interest can also be included in the highest ranked set of points of interest, for example, to ensure that the overlay includes points of interest for each potential map view of the map space. For example, assume that after the initial map view of the map space is presented at the client device, the user pans right to reveal a different portion of the map space that was not initially presented. Further assume that the panning resulted in the geographic location of a point of interest that was visually identified in the initial map view to no longer be presented on screen. In this example, the highest ranked set of the identified points of interest would need to include a point of interest having a geographic location that is within the newly presented map view to replace the point of interest that was occluded by the panning.

In some implementations, the highest ranked set of points of interest are selected based on a combination of the likelihood of user interaction with the visual components identifying the points of interest and an adjustment factor. In some implementations, the combination of the likelihood of user interaction and the adjustment factor provide a ranking score that is used to rank the points of interest. For example, relationship (1) can be used to generate the ranking score for each point of interest.

$$RS_i = PI_i * AF_i \qquad (1)$$

where,

RS_i is the ranking score of point of interest i;
PI_i is the probability of user interaction with the visual component representing the point of interest i; and
AF_i is the adjustment factor for the point of interest i.

The adjustment factor can be any number of values associated with the point of interest. For example, the adjustment factor could be a quality metric associated with the point of interest. Alternatively, the adjustment factor could be a bid (e.g., an amount paid for user interaction with the point of interest on a map) specified by an entity that is associated with the point of interest (e.g., an owner of a coffee shop).

In some implementations, the set of highest ranked points of interest will be selected using relationship (2).

$$n = argmax\_i \sum_{0}^{i} PI_i * AF_{i+1} \qquad (2)$$

where,

n is the number of points of interest included in the highest ranked set of points of interest;
PI_i is the probability of user interaction with the visual component representing the point of interest i; and

AF_{i+1} is the adjustment factor for the point of interest i+1 that is next highest ranked relative to the point of interest i.

The overlay can be generated to dynamically change which points of interest are identified within a given map view based on the ranking. In some implementations, the dynamic change to the presented points of interest is performed in response to user interaction with the interactive map at the client device. For example, a change in the map view can result in a change in which points of interest are identified by visual components presented in the map space. More specifically, assume that the point of interest density threshold for the initial map view is 3, and that the user interacts with a zoom control to generate an updated map view having a higher level of zoom (e.g., as illustrated by map views 208 and 214 in Fig. 2). In this example, the higher zoom level may correspond to a point of interest density threshold of 4 (e.g., based on the stored mapping of zoom levels to density thresholds). As such, the overlay can reveal (e.g., present) an additional visual component to identify the geographic location of an additional point of interest. In some implementations, the additional point of interest identified by the additional visual component may be the next highest ranked point of interest that was not initially identified in the prior map view. In some implementations, the rankings are performed separately for different zoom levels, such that a change to the zoom level may reveal an entirely (or partially) different set of points of interest than was previously presented.

overlay information for the overlay is cached at the client device (310). In some implementations, the overlay information includes the highest ranked set of points of interest, geographic data (e.g., geographic coordinates) identifying the geographic locations of the highest ranked set of points of interest, and visual components that are used to visually identify each of the points of interest in the highest ranked set of points of interest. Caching the overlay information at the client device, including points of interest that are not initially presented in the initial map view, enables dynamic and seamless updating of the points of interest presented in subsequent map views as the user interacts with the map space. For example, the client device is not required to initiate a network call to identify different points of interest for a different map view because the new points of interest can be obtained locally from the overlay information. As such, the user can seamlessly interact with the map space and obtain relevant information without waiting on additional information from remote servers.

In addition to having a specific geographic location associated with each point of interest, the point of interest may additionally have other properties including, for example, an encoded universal resource locator, associated categories, operations-based information (e.g., hours of operation), or other parameters. For example, a point of interest representing the Example Science Museum in Atlanta, GA may include a URL of the museum website, an associated category of "museum" and "IMAX," as well as their daily hours of operation and ticket prices. Code included in each the visual component for the Example Science Museum can enable various information to be presented in response to user interaction with the visual component. For example, a user hover or initial user click of the visual component may reveal information about the point of interest in the map view. Additionally, or alternatively, a second user click on the visual component may initiate a request for a web page that is linked to by the visual component (e.g., a website for the point of interest).

In some implementations, a client device can provide feedback about a particular point of interest having been selected to appear during a presentation of a map view at the client device. For example, the client device can provide feedback as to the duration that the point of interest was within the viewport on the client device, whether the particular user interacted with the point of interest during the duration, or if a particular point of interest has appeared multiple occasions in the map view within a certain period of time. This information can be used to determine whether to log an impression of the point of interest in the map view.

In some implementations, the map space is also cached at the client device. For example, the portion of the map space that is used to generate the initial map view and/or additional portions of the map space are cached at the client device to facilitate seamless transitions between map views. The portion of the map space cached at the client device (e.g., in response to the initial map request) can include portions of the map space that include geographic areas beyond those presented in the map view prior to user interaction with the map space (e.g., off screen areas).

The user interface is updated with the map space and the overlay (312). In some implementations, the user interface is initially updated to present the initial map view (e.g., a view of the map space that is centered on the particular geographic location) and visual components identifying one or more points of interest in the initial map view. For example, map view 224 is an example of a client device with a user interface that was updated to present an initial map view.

After the initial map view is presented, the user interface can be further updated using the cached map space and the cached overlay information. For example, a user interaction with a change view control can be detected, and the zoom level at which the map space will be presented in response to the user interaction can be identified. For example, a single user interaction with a zoom level control may increase the level of zoom by one level. As such, detection of a single user interaction with the zoom level control may identify the zoom level as being one level higher than the current zoom level.

The identified zoom level is used to identify a corresponding point of interest density threshold in the cached overlay information. For example, as discussed above, the overlay information can include a mapping of zoom levels to corresponding point of interest density thresholds. This mapping can be accessed, within the cached overlay information, to locate the identified zoom level, and read the corresponding point of interest density threshold for the identified zoom level.

A set of points of interest that have a geographic location that is visually depicted in the viewport at the identified zoom level is identified from the cached overlay information. For example, the client device can access the cached overlay information to identify which points of interest have geographic coordinates that are within the range of geographic coordinates of the map view being presented. The rankings of these points of interest can also be identified from the cached overlay information, such that the relative rankings of these identified points of interest are available to the client device. One or more of the identified points of interest are then selected to be visually identified in the map view using corresponding visual components. In some implementations, the number of the identified points of interest that are selected is less than or equal to the corresponding point of interest density threshold for the identified zoom level. For example, the selected points of interest can be the highest x ranked points of interest from the identified points of interest, where x is the points of interest density threshold for the identified zoom level.

In some implementations, the one or more points of interest are selected based on a device type of the client device or a screen size of the client device. For example, as discussed above, the device type (e.g., tablet, mobile, desktop) and/or model number of the device may be included in the request. As such, this information can be used to lookup a screen size and/or resolution of the client device. This information, alone or in combination with other display characteristics (e.g., a size and/or location of the viewport in the display) can be used to determine how many points of interest will be selected for inclusion in the overlay.

In some implementations, the one or more points of interest are selected based on a number of points of interest that have been pre-selected for presentation prior to the current selection of points of interest. For example, assume that prior to selecting points of interest in response to the user interaction with the change view control, a particular point of interest (e.g., a federal park) was selected to be identified in the map space. In this example, the selection of the points of interest in response to the user interaction can be modified to account for the pre-selection of the particular point of interest. More specifically, the number of points of interest selected can be reduced based on the pre-selection of the particular point of interest.

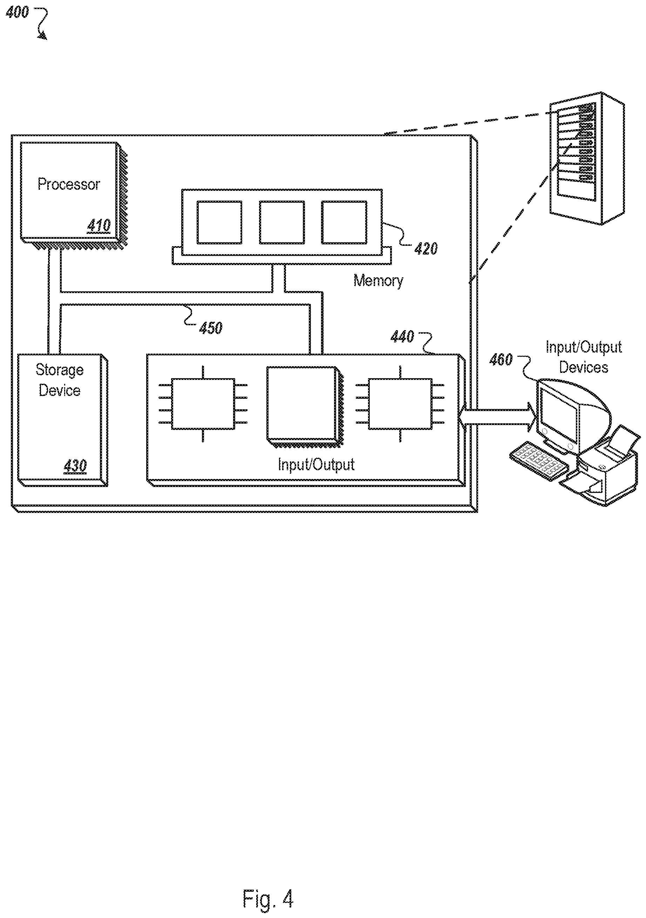

FIG. 4 is block diagram of an example computer system 400 that can be used to perform operations described above. The system 400 includes a processor 410, a memory 420, a storage device 430, and an input/output device 440. Each of the components 410, 420, 430, and 440 can be interconnected, for example, using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 can include, for example, a hard disk device, an optical disk device, a storage device that is shared over a network by multiple computing devices (e.g., a cloud storage device), or some other large capacity storage device.

The input/output device 440 provides input/output operations for the system 400. In one implementation, the input/output device 440 can include one or more of a network interface device, e.g., an Ethernet card, a serial communication device, e.g., and RS-232 port, and/or a wireless interface device, e.g., and 802.11 card. In another implementation, the input/output device can include driver devices configured to receive input data and send output data to other input/output devices, e.g., keyboard, printer and display devices 460. Other implementations, however, can also be used, such as mobile computing devices, mobile communication devices, set-top box television client devices, etc.

Although an example processing system has been described in FIG. 4, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document may, but need not, correspond to a file. A document may be stored in a portion of a file that holds other documents, in a single file dedicated to the document in question, or in multiple coordinated files.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a standalone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magneto optical disks, and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A system (100) comprising:

    a map database (118) that stores map data defining a map;
    a map server (104) in communication with the map database that receives a request for presentation of an interactive map from a user device (106, 204) that visually depicts a particular geographic location, and selects a map space for presentation in a user interface (110, 206, 222) on the user device, the map space including the particular geographic location; and
    one or more servers (120) that identify multiple points of interest having geographic locations that are located within a geographic region that is visually depicted by the selected map space and generate an overlay that dynamically presents, at the client device, one or more visual components at geographic locations of at least some of the identified points of interest within the map space based on display characteristics of the client device, including:

        ranking the identified multiple points of interest based on a likelihood of interaction with each of the visual components representing the points of interest;
        generating an overlay that prevents a number of visual components presented for the identified points of interest from exceeding a point of interest density threshold that is mapped to display characteristics of the client device in a data structure, wherein different point of interest density thresholds are mapped to different combinations of display characteristics in the data structure, wherein the point of interest density threshold is used to limit the number of points of interest that is pre-cached at the client device; and

        generating an overlay that dynamically changes, based on the ranking, which points of interest are identified by presented visual components in response to user interaction with the interactive map at the client device.

2. The system of claim 1, wherein the map space selected by the map server has a map area that results in at least a portion of the map space being outside of a viewport (112) of the client device prior to user interaction with the map space.

3. The system of claim 1, wherein generating the overlay comprises generating an overlay that updates, at the client device using the cached overlay information, points of interest identified by the presented visual components based on user interaction with a change view control (116, 210, 226) that changes a zoom level at which the map space is presented in the viewport, wherein the update is performed without requiring the client device to initiate an additional network call to the one or more servers.

4. The system of claim 3, wherein updating the points of interest identified by the presented visual components comprises:

    identifying a zoom level at which the map space is being presented in response to user interaction with the change view control;
    identifying, within the cached overlay information, a corresponding point of interest density threshold for the identified zoom level;
    identifying, within the cached overlay information, a set of points of interest that have a geographic location that is visually depicted in the viewport at the identified zoom level; and
    selecting, from the identified set of points of interest, one or more points of interest to be visually identified using a corresponding visual component, wherein a total number of the points of interest selected is less than or equal to the corresponding point of interest density threshold for the identified zoom level.

5. The system of claim 4, wherein selecting the one or more points of interest comprises selecting the total number of highest ranked points of interest from the ranking.

6. The system of claim 1, wherein ranking the identified multiple points of interest comprises ranking the identified multiple points of interest based on one or more of geographic locations previously visited by the user, categories of locations previously visited by the user, a frequency at which the user has previously visited different categories of locations, time of day information associated with previous visits to different categories of locations, a proximity of the points of interest to previous locations visited by the user, or search queries performed by the user on any supported search interface.

7. A method (300) comprising:

receiving (302), from a client device (106, 204), a request for presentation of an interactive map in a user interface (110, 206, 222) that visually depicts a particular geographic location; selecting (304), by one or more servers (104) and based on the request, a map space that includes the particular geographic location; identifying (306) multiple points of interest having geographic locations that are located within a geographic region that is visually depicted by the selected map space; generating (308), by one or more servers (108), an overlay that dynamically presents, at the client device, one or more visual components at geographic locations of at least some of the identified points of interest within the map space based on display characteristics of the client device, including:

ranking the identified multiple points of interest based on a likelihood of interaction with each of the visual components representing the points of interest; generating an overlay that prevents a number of visual components presented for the identified points of interest from exceeding a point of interest density threshold that is mapped to display characteristics of the client device in a data structure, wherein different point of interest density thresholds are mapped to different combinations of display characteristics in the data structure, wherein the point of interest density threshold is used to limit the number of points of interest that is pre-cached at the client device; and generating an overlay that dynamically changes, based on the ranking, which points of interest are identified by presented visual components in response to user interaction with the interactive map at the client device.

8. The method of claim 7, further comprising:

caching (310), at the client device, overlay information for the overlay and a portion of the map space; and updating (312) the user interface of the client device with the map space and the overlay.

9. The method of claim 7 or 8, wherein the map space has a map area that results in at least a portion of the map space being outside of a viewport (112) of the client device prior to user interaction with the map space.

10. The method of claim 7 or 8, wherein generating the overlay comprises generating an overlay that updates, at the client device using the cached overlay information, points of interest identified by the presented visual components based on user interaction with a change view control (116, 210, 226) that changes a zoom level at which the map space is presented in the viewport, wherein the update is performed without requiring the client device to initiate an additional network call to the one or more servers.

11. The method of claim 10, wherein updating the points of interest identified by the presented visual components comprises:

identifying a zoom level at which the map space is being presented in response to user interaction with the change view control; identifying, within the cached overlay information, a corresponding point of interest density threshold for the identified zoom level; identifying, within the cached overlay information, a set of points of interest that have a geographic location that is visually depicted in the viewport at the identified zoom level; and selecting, from the identified set of points of interest, one or more points of interest to be visually identified using a corresponding visual component, wherein a total number of the points of interest selected is less than or equal to the corresponding point of interest density threshold for the identified zoom level.

12. The method of claim 11, wherein selecting the one or more points of interest comprises:

selecting the total number of highest ranked points of interest from the ranking; or selecting the one or more points of interest based on a device type of the client device or a screen size of the client device.

13. The method of claim 11, wherein selecting the one or more points of interest comprises selecting the one or more points of interest based on a number of points of interest that have been pre-selected for presentation prior to the selecting.

14. The method of claim 7 or 8, wherein ranking the identified multiple points of interest comprises ranking the identified multiple points of interest based on one or more of geographic locations previously visited by the user, categories of locations previously visited by the user, a frequency at which the user has previously visited different categories of locations, time of day information associated with previous visits to different categories of locations, a proximity of the points of interest to previous locations visited by the user, or search queries performed by the user on any supported search interface.

15. A non-transitory computer storage medium (430) encoded with a computer program, the program comprising instructions that when executed by a data processing apparatus (410) cause the data processing apparatus to perform a method according to any one of claims 7 to 14.


**Patentansprüche**

1. System (100), umfassend:

    eine Kartendatenbank (118), die Kartendaten speichert, die eine Karte definieren;
    einen Kartenserver (104) in Kommunikation mit der Kartendatenbank, der eine Anforderung zur Darstellung einer interaktiven Karte, die einen konkreten geografischen Ort visuell abbildet, von einer Benutzervorrichtung (106, 204) empfängt und einen Kartenraum zur Darstellung in einer Benutzerschnittstelle (110, 206, 222) auf der Benutzervorrichtung auswählt, wobei der Kartenraum den konkreten geografischen Ort beinhaltet; und
    einen oder mehrere Server (120), die mehrere Punkte von Interesse identifizieren, die geografische Orte aufweisen, die sich innerhalb einer geografischen Region befinden, die durch den ausgewählten Kartenraum visuell abgebildet wird, und eine Überlagerung generieren, die basierend auf Anzeigeeigenschaften der Clientvorrichtung eine oder mehrere visuelle Komponenten an geografischen Orten von mindestens einigen der identifizierten Punkte von Interesse innerhalb des Kartenraums an der Clientvorrichtung dynamisch darstellt, einschließlich:

        Einstufen der identifizierten mehreren Punkte von Interesse basierend auf einer Wahrscheinlichkeit einer Interaktion mit jeder der visuellen Komponenten, welche die Punkte von Interesse wiedergeben;
        Generieren einer Überlagerung, die verhindert, dass eine Anzahl an visuellen Komponenten, die für die identifizierten Punkte von Interesse dargestellt wird, einen Dichteschwellenwert für Punkte von Interesse, der den Anzeigeeigenschaften der Clientvorrichtung in einer Datenstruktur zugeordnet ist, überschreitet, wobei unterschiedliche Dichteschwellenwerte für Punkte von Interesse unterschiedlichen Kombinationen von Anzeigeeigenschaften in der Datenstruktur zugeordnet sind, wobei der Dichteschwellenwert für Punkte von Interesse verwendet wird, um die Anzahl an Punkten von Interesse zu begrenzen, die an der Clientvorrichtung vorab zwischengespeichert wird; und
        Generieren einer Überlagerung, die basierend auf der Einstufung dynamisch ändert, welche Punkte von Interesse durch dargestellte visuelle Komponenten als Reaktion auf Benutzerinteraktion mit der interaktiven Karte an der Clientvorrichtung identifiziert werden.

2. System nach Anspruch 1, wobei der durch den Kartenserver ausgewählte Kartenraum einen Kartenbereich aufweist, der dazu führt, dass vor Benutzerinteraktion mit dem Kartenraum mindestens ein Abschnitt des Kartenraums außerhalb eines Ansichtsfensters (112) der Clientvorrichtung liegt.

3. System nach Anspruch 1, wobei das Generieren der Überlagerung Generieren einer Überlagerung umfasst, die an der Clientvorrichtung unter Verwendung der zwischengespeicherten Überlagerungsinformationen Punkte von Interesse aktualisiert, die durch die dargestellten visuellen Komponenten basierend auf Benutzerinteraktion mit einer Änderungsansichtssteuerung (116, 210, 226), die eine Zoomstufe ändert, bei welcher der Kartenraum in dem Ansichtsfenster dargestellt wird, identifiziert werden, wobei die Aktualisierung durchgeführt wird, ohne dass es erforderlich ist, dass die Clientvorrichtung einen zusätzlichen Netzwerkaufruf an den einen oder die mehreren Server initiiert.

4. System nach Anspruch 3, wobei das Aktualisieren der Punkte von Interesse, die durch die dargestellten visuellen Komponenten identifiziert werden, Folgendes umfasst:

    Identifizieren einer Zoomstufe, bei welcher der Kartenraum dargestellt wird, als Reaktion auf Benutzerinteraktion mit dem Änderungsansichtssteuerelement;
    Identifizieren, innerhalb der zwischengespeicherten Überlagerungsinformationen, eines entsprechenden Dichteschwellenwerts für Punkte von Interesse für die identifizierte Zoomstufe;
    Identifizieren, innerhalb der zwischengespeicherten Überlagerungsinformationen, eines Satzes von Punkten von Interesse, die einen geografischen Ort aufweisen, der in dem Ansichtsfenster auf der identifizierten Zoomstufe visuell abgebildet wird; und

Auswählen, aus dem identifizierten Satz von Punkten von Interesse, eines oder mehrerer visuell zu identifizierender Punkte von Interesse unter Verwendung einer entsprechenden visuellen Komponente, wobei eine Gesamtanzahl der ausgewählten Punkte von Interesse kleiner als oder gleich dem entsprechenden Dichteschwellenwert für Punkte von Interesse für die identifizierte Zoomstufe ist.

5. System nach Anspruch 4, wobei das Auswählen des einen oder der mehreren Punkte von Interesse Auswählen der Gesamtanzahl an am höchsten eingestufter Punkte von Interesse aus der Einstufung umfasst.

6. System nach Anspruch 1, wobei das Einstufen der identifizierten mehreren Punkte von Interesse Einstufen der identifizierten mehreren Punkte von Interesse basierend auf einem oder mehreren von geografischen Orten, die zuvor durch den Benutzer besucht wurden, Kategorien von Orten, die zuvor durch den Benutzer besucht wurden, einer Häufigkeit, mit welcher der Benutzer zuvor unterschiedliche Kategorien von Orten besucht hat, Tageszeitinformationen, die mit vorherigen Besuchen unterschiedlicher Kategorien von Orten assoziiert sind, einer Nähe der Punkte von Interesse zu vorherigen Orten, die durch den Benutzer besucht wurden, oder Suchanfragen, die durch den Benutzer auf einer beliebigen unterstützten Suchschnittstelle durchgeführt werden, umfasst.

7. Verfahren (300), umfassend:

Empfangen (302), von einer Clientvorrichtung (106, 204), einer Anforderung zur Darstellung einer interaktiven Karte, die einen konkreten geografischen Ort visuell abbildet, in einer Benutzerschnittstelle (110, 206, 222);
Auswählen (304), durch einen oder mehrere Server (104) und basierend auf der Anforderung, eines Kartenraums, der den konkreten geografischen Ort beinhaltet;
Identifizieren (306) mehrerer Punkte von Interesse, die geografische Orte aufweisen, die sich innerhalb einer geografischen Region befinden, die durch den ausgewählten Kartenraum visuell abgebildet wird;
Generieren (308), durch einen oder mehrere Server (108), einer Überlagerung, die basierend auf Anzeigeeigenschaften der Clientvorrichtung eine oder mehrere visuelle Komponenten an geografischen Orten von mindestens einigen der identifizierten Punkte von Interesse innerhalb des Kartenraums an der Clientvorrichtung dynamisch darstellt, einschließlich:

Einstufen der identifizierten mehreren Punkte von Interesse basierend auf einer Wahrscheinlichkeit einer Interaktion mit jeder der visuellen Komponenten, welche die Punkte von Interesse wiedergeben;
Generieren einer Überlagerung, die verhindert, dass eine Anzahl an visuellen Komponenten, die für die identifizierten Punkte von Interesse dargestellt wird, einen Dichteschwellenwert für Punkte von Interesse, der den Anzeigeeigenschaften der Clientvorrichtung in einer Datenstruktur zugeordnet ist, überschreitet, wobei unterschiedliche Dichteschwellenwerte für Punkte von Interesse unterschiedlichen Kombinationen von Anzeigeeigenschaften in der Datenstruktur zugeordnet sind, wobei der Dichteschwellenwert für Punkte von Interesse verwendet wird, um die Anzahl an Punkten von Interesse zu begrenzen, die an der Clientvorrichtung vorab zwischengespeichert wird; und
Generieren einer Überlagerung, die basierend auf der Einstufung dynamisch ändert, welche Punkte von Interesse durch dargestellte visuelle Komponenten als Reaktion auf Benutzerinteraktion mit der interaktiven Karte an der Clientvorrichtung identifiziert werden.

8. Verfahren nach Anspruch 7, ferner umfassend:

Zwischenspeichern (310), an der Clientvorrichtung, von Überlagerungsinformationen für die Überlagerung und eines Abschnitts des Kartenraums; und
Aktualisieren (312) der Benutzerschnittstelle der Clientvorrichtung mit dem Kartenraum und der Überlagerung.

9. Verfahren nach Anspruch 7 oder 8, wobei der Kartenraum einen Kartenbereich aufweist, der dazu führt, dass vor Benutzerinteraktion mit dem Kartenraum mindestens ein Abschnitt des Kartenraums außerhalb eines Ansichtsfensters (112) der Clientvorrichtung liegt.

10. Verfahren nach Anspruch 7 oder 8, wobei das Generieren der Überlagerung Generieren einer Überlagerung umfasst, die an der Clientvorrichtung unter Verwendung der zwischengespeicherten Überlagerungsinformationen Punkte von Interesse aktualisiert, die durch die dargestellten visuellen Komponenten basierend auf Benutzerinteraktion mit einer Änderungsansichtssteuerung (116, 210, 226), die eine Zoomstufe ändert, bei welcher der Kartenraum in dem Ansichtsfenster dargestellt wird, identifiziert werden, wobei die Aktualisierung durchgeführt wird, ohne dass es erforderlich ist, dass die Clientvorrichtung einen zusätzlichen Netzwerkaufruf an den einen oder die mehreren Server initiiert.

11. Verfahren nach Anspruch 10, wobei das Aktualisieren der Punkte von Interesse, die durch die dargestellten visuellen Komponenten identifiziert werden, Folgendes umfasst:

   Identifizieren einer Zoomstufe, bei welcher der Kartenraum dargestellt wird, als Reaktion auf Benutzerinteraktion mit dem Änderungsansichtssteuerelement;
   Identifizieren, innerhalb der zwischengespeicherten Überlagerungsinformationen, eines entsprechenden Dichteschwellenwerts für Punkte von Interesse für die identifizierte Zoomstufe;
   Identifizieren, innerhalb der zwischengespeicherten Überlagerungsinformationen, eines Satzes von Punkten von Interesse, die einen geografischen Ort aufweisen, der in dem Ansichtsfenster auf der identifizierten Zoomstufe visuell abgebildet wird; und
   Auswählen, aus dem identifizierten Satz von Punkten von Interesse, eines oder mehrerer visuell zu identifizierender Punkte von Interesse unter Verwendung einer entsprechenden visuellen Komponente, wobei eine Gesamtanzahl der ausgewählten Punkte von Interesse kleiner als oder gleich dem entsprechenden Dichteschwellenwert für Punkte von Interesse für die identifizierte Zoomstufe ist.

12. Verfahren nach Anspruch 11, wobei das Auswählen des einen oder der mehreren Punkte von Interesse Folgendes umfasst:

   Auswählen der Gesamtanzahl an am höchsten eingestufter Punkte von Interesse aus der Einstufung; oder
   Auswählen des einen oder der mehreren Punkte von Interesse basierend auf einem Vorrichtungstyp der Clientvorrichtung oder einer Bildschirmgröße der Clientvorrichtung.

13. Verfahren nach Anspruch 11, wobei das Auswählen des einen oder der mehreren Punkte von Interesse Auswählen des einen oder der mehreren Punkte von Interesse basierend auf einer Anzahl an Punkten von Interesse umfasst, die vor dem Auswählen zur Darstellung vorausgewählt wurde.

14. Verfahren nach Anspruch 7 oder 8, wobei das Einstufen der identifizierten mehreren Punkte von Interesse Einstufen der identifizierten mehreren Punkte von Interesse basierend auf einem oder mehreren von geografischen Orten, die zuvor durch den Benutzer besucht wurden, Kategorien von Orten, die zuvor durch den Benutzer besucht wurden, einer Häufigkeit, mit welcher der Benutzer zuvor unterschiedliche Kategorien von Orten besucht hat, Tageszeitinformationen, die mit vorherigen Besuchen unterschiedlicher Kategorien von Orten assoziiert sind, einer Nähe der Punkte von Interesse zu vorherigen Orten, die durch den Benutzer besucht wurden, oder Suchanfragen, die durch den Benutzer auf einer beliebigen unterstützten Suchschnittstelle durchgeführt werden, umfasst.

15. Nicht transitorisches Computerspeichermedium (430), das mit einem Computerprogramm codiert ist, wobei das Programm Anweisungen umfasst, die bei Ausführung durch ein Datenverarbeitungsgerät (410) das Datenverarbeitungsgerät dazu veranlassen, ein Verfahren nach einem der Ansprüche 7 bis 14 durchzuführen.

## Revendications

1. Système (100) comprenant :

   une base de données cartographique (118) qui stocke des données cartographiques définissant une carte ;
   un serveur cartographique (104) en communication avec la base de données cartographique qui reçoit une demande de présentation d'une carte interactive à partir d'un dispositif utilisateur (106, 204) qui représente visuellement un emplacement géographique particulier, et sélectionne un espace cartographique pour la présentation dans une interface utilisateur (110, 206, 222) sur le dispositif utilisateur, l'espace cartographique comportant l'emplacement géographique particulier ; et
   un ou plusieurs serveurs (120) qui identifient plusieurs points d'intérêt ayant des emplacements géographiques qui sont situés dans une région géographique qui est représentée visuellement par l'espace cartographique sélectionné et génèrent une superposition qui présente dynamiquement, au niveau du dispositif client, un ou plusieurs composants visuels à des emplacements géographiques d'au moins certains des points d'intérêt identifiés dans l'espace cartographique sur la base des caractéristiques d'affichage du dispositif client, comportant :

      le classement des multiples points d'intérêt identifiés sur la base de la probabilité d'interaction avec chacun des composants visuels représentant les points d'intérêt ;
la génération d'une superposition qui empêche un certain nombre de composants visuels présentés pour les points d'intérêt identifiés de dépasser un seuil de densité de points d'intérêt qui est mappé pour afficher les caractéristiques du dispositif client dans une structure de données, dans lequel différents seuils de densité de points d'intérêt sont mappés à différentes combinaisons de caractéristiques d'affichage dans la structure de données, dans lequel le seuil de densité de points d'intérêt est utilisé pour limiter le nombre de points d'intérêt qui sont pré-mis en cache sur le dispositif client ; et
la génération d'une superposition qui change dynamiquement, sur la base du classement, lesquels points d'intérêt sont identifiés par les composants visuels présentés en réponse à l'interaction de l'utilisateur avec la carte interactive sur le dispositif client.

2. Système selon la revendication 1, dans lequel l'espace cartographique sélectionné par le serveur cartographique possède une zone cartographique qui fait qu'au moins une partie de l'espace cartographique se trouve à l'extérieur d'une fenêtre d'affichage (112) du dispositif client avant l'interaction de l'utilisateur avec l'espace cartographique.

3. Système selon la revendication 1, dans lequel la génération de la superposition comprend la génération d'une superposition qui met à jour, au niveau du dispositif client à l'aide des informations de superposition mises en cache, des points d'intérêt identifiés par les composants visuels présentés sur la base de l'interaction de l'utilisateur avec une commande de changement de vue (116, 210, 226) qui modifie un niveau de zoom auquel l'espace cartographique est présenté dans la fenêtre d'affichage, dans lequel la mise à jour est réalisée sans nécessiter que le dispositif client lance un appel réseau supplémentaire vers les un ou plusieurs serveurs.

4. Système selon la revendication 3, dans lequel la mise à jour des points d'intérêt identifiés par les composants visuels présentés comprend :

l'identification d'un niveau de zoom auquel l'espace cartographique est présenté en réponse à l'interaction de l'utilisateur avec la commande de changement de vue ;
l'identification, dans les informations de superposition mises en cache, d'un seuil de densité de points d'intérêt correspondant pour le niveau de zoom identifié ;

l'identification, dans les informations de superposition mises en cache, d'un ensemble de points d'intérêt qui ont un emplacement géographique qui est représenté visuellement dans la fenêtre d'affichage au niveau de zoom identifié ; et
la sélection, à partir de l'ensemble identifié de points d'intérêt, d'un ou de plusieurs points d'intérêt à identifier visuellement à l'aide d'un composant visuel correspondant, dans lequel un nombre total de points d'intérêt sélectionnés est inférieur ou égal au seuil de densité de points d'intérêt correspondant pour le niveau de zoom identifié.

5. Système selon la revendication 4, dans lequel la sélection des un ou plusieurs points d'intérêt comprend la sélection du nombre total de points d'intérêt les mieux classés dans le classement.

6. Système selon la revendication 1, dans lequel le classement des multiples points d'intérêt identifiés comprend le classement des multiples points d'intérêt identifiés sur la base d'un ou de plusieurs des emplacements géographiques précédemment visités par l'utilisateur, des catégories d'emplacements précédemment visités par l'utilisateur, d'une fréquence à laquelle l'utilisateur a précédemment visité différentes catégories d'emplacements, d'informations sur l'heure de la journée associées à des visites précédentes à différentes catégories d'emplacements, d'une proximité des points d'intérêt par rapport aux emplacements précédemment visités par l'utilisateur, ou des demandes de recherche réalisées par l'utilisateur sur une quelconque interface de recherche prise en charge.

7. Procédé (300) comprenant :

la réception (302), à partir d'un dispositif client (106, 204), d'une demande de présentation d'une carte interactive dans une interface utilisateur (110, 206, 222) qui représente visuellement un emplacement géographique particulier ;
la sélection (304), par un ou plusieurs serveurs (104) et sur la base de la demande, d'un espace cartographique qui comporte l'emplacement géographique particulier ;
l'identification (306) de multiples points d'intérêt ayant des emplacements géographiques qui sont situés dans une région géographique qui est représentée visuellement par l'espace cartographique sélectionné ;
la génération (308), par un ou plusieurs serveurs (108), d'une superposition qui présente dynamiquement, au niveau du dispositif client, un ou plusieurs composants visuels à des emplacements géographiques d'au moins certains des points d'intérêt identifiés dans l'espace cartographique sur la base des caractéristiques d'affichage du dispositif client, comportant :

le classement des multiples points d'intérêt identifiés sur la base de la probabilité d'interaction avec chacun des composants visuels représentant les points d'intérêt ; la génération d'une superposition qui empêche un certain nombre de composants visuels présentés pour les points d'intérêt identifiés de dépasser un seuil de densité de points d'intérêt qui est mappé pour afficher les caractéristiques du dispositif client dans une structure de données, dans lequel différents seuils de densité de points d'intérêt sont mappés à différentes combinaisons de caractéristiques d'affichage dans la structure de données, dans lequel le seuil de densité de points d'intérêt est utilisé pour limiter le nombre de points d'intérêt qui sont pré-mis en cache sur le dispositif client ; et la génération d'une superposition qui change dynamiquement, sur la base du classement, lesquels points d'intérêt sont identifiés par les composants visuels présentés en réponse à l'interaction de l'utilisateur avec la carte interactive sur le dispositif client.

8. Procédé selon la revendication 7, comprenant également :

la mise en cache (310), au niveau du dispositif client, des informations de superposition pour la superposition et d'une partie de l'espace cartographique ; et la mise à jour (312) de l'interface utilisateur du dispositif client avec l'espace cartographique et la superposition.

9. Procédé selon la revendication 7 ou 8, dans lequel l'espace cartographique possède une zone cartographique qui fait qu'au moins une partie de l'espace cartographique se trouve à l'extérieur d'une fenêtre d'affichage (112) du dispositif client avant l'interaction de l'utilisateur avec l'espace cartographique.

10. Procédé selon la revendication 7 ou 8, dans lequel la génération de la superposition comprend la génération d'une superposition qui met à jour, au niveau du dispositif client à l'aide des informations de superposition mises en cache, des points d'intérêt identifiés par les composants visuels présentés sur la base de l'interaction de l'utilisateur avec une commande de changement de vue (116, 210, 226) qui modifie un niveau de zoom auquel l'espace cartographique est présenté dans la fenêtre d'affichage, dans lequel la mise à jour est réalisée sans nécessiter que le dispositif client lance un appel réseau supplémentaire vers les un ou plusieurs serveurs.

11. Procédé selon la revendication 10, dans lequel la mise à jour des points d'intérêt identifiés par les composants visuels présentés comprend :

l'identification d'un niveau de zoom auquel l'espace cartographique est présenté en réponse à l'interaction de l'utilisateur avec la commande de changement de vue ; l'identification, dans les informations de superposition mises en cache, d'un seuil de densité de points d'intérêt correspondant pour le niveau de zoom identifié ; l'identification, dans les informations de superposition mises en cache, d'un ensemble de points d'intérêt qui ont un emplacement géographique qui est représenté visuellement dans la fenêtre d'affichage au niveau de zoom identifié ; et la sélection, à partir de l'ensemble identifié de points d'intérêt, d'un ou de plusieurs points d'intérêt à identifier visuellement à l'aide d'un composant visuel correspondant, dans lequel un nombre total de points d'intérêt sélectionnés est inférieur ou égal au seuil de densité de points d'intérêt correspondant pour le niveau de zoom identifié.

12. Procédé selon la revendication 11, dans lequel la sélection des un ou plusieurs points d'intérêt comprend :

la sélection du nombre total de points d'intérêt les mieux classés dans le classement ; ou la sélection des un ou plusieurs points d'intérêt sur la base d'un type de dispositif du dispositif client ou d'une taille d'écran du dispositif client.

13. Procédé selon la revendication 11, dans lequel la sélection des un ou plusieurs points d'intérêt comprend la sélection des un ou plusieurs points d'intérêt sur la base d'un certain nombre de points d'intérêt qui ont été présélectionnés pour la présentation avant la sélection.

14. Procédé selon la revendication 7 ou 8, dans lequel le classement des multiples points d'intérêt identifiés comprend le classement des multiples points d'intérêt identifiés sur la base d'un ou de plusieurs des emplacements géographiques précédemment visités par l'utilisateur, des catégories d'emplacements précédemment visités par l'utilisateur, d'une fréquence à laquelle l'utilisateur a précédemment visité différentes catégories d'emplacements, d'informations sur l'heure de la journée associées à des visites précédentes à différentes catégories d'emplacements, d'une proximité des points d'intérêt par rapport aux emplacements précédemment visités par l'utilisateur, ou des demandes de recherche réalisées par l'utilisateur sur une quelconque interface de recherche prise en charge.

15. Support de stockage informatique non transitoire (430) codé avec un programme informatique, le programme comprenant des instructions qui, lorsqu'elles sont exécutées par un appareil de traitement de données (410) amènent l'appareil de traitement de données à réaliser un procédé selon l'une quelconque des revendications 7 à 14.

Ranking
POI$_1$
POI$_2$
.
.
.
POI$_N$

Points of Interest
Selection Server
**120**

Overlay Server
**108**

TD$_1$ : ZL$_1$
TD$_2$ : ZL$_2$
.
.
.
TD$_N$ : ZL$_N$

User
Historical Data
**124**

Map Server
**104**

POI$_1$, Geo$_1$
POI$_2$, Geo$_2$
POI$_3$, Geo$_3$
.
.
.
POI$_N$, Geo$_N$

Points of
Interest
Database
**122**

Network
**102**

Map
Database
**118**

**100**

Client Devices
**106**

Electronic Map Interface **110**

Change View
Control
**116**

Viewport **112**

Map View
**114**

Fig. 1

Fig. 2

300

```
                        ┌─────────────────────────────────────────────┐
                        │ Receive, from a client device, a request    │  ⌐ 302
                        │ for of an interactive map that depicts a     │
                        │ particular geographic location              │
                        └─────────────────────────────────────────────┘
                                          │
                                          ▼
                        ┌─────────────────────────────────────────────┐
                        │ Select a map space that includes the        │  ⌐ 304
                        │ particular geographic location              │
                        └─────────────────────────────────────────────┘
                                          │
                                          ▼
                        ┌─────────────────────────────────────────────┐
                        │ Identify multiple points of interest having │  ⌐ 306
                        │ geographic locations that are within a      │
                        │ geographic region visually depicted by the  │
                        │ selected map space                          │
                        └─────────────────────────────────────────────┘
                                          │
                                          ▼
                        ┌─────────────────────────────────────────────┐
                        │ Generate an overlay for the multiple points │  ⌐ 308
                        │ of interest                                 │
                        └─────────────────────────────────────────────┘
                                          │
                                          ▼
                        ┌─────────────────────────────────────────────┐
                        │ Cache overlay information for the overlay   │  ⌐ 310
                        │ and a portion of the map space at the       │
                        │ client device                               │
                        └─────────────────────────────────────────────┘
                                          │
                                          ▼
                        ┌─────────────────────────────────────────────┐
                        │ Update the user interface of the client     │  ⌐ 312
                        │ device with the map space and overlay       │
                        └─────────────────────────────────────────────┘
```

Fig. 3

400

Processor
410

420

Memory

450

440

Storage
Device

430

Input/Output

460

Input/Output
Devices

Fig. 4

**EP 3 491 549 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

*   US 2009055087 A1